# EUROPEAN PATENT APPLICATION

(11) **EP 3 819 669 A1**
(43) Date of publication of application: **12.05.2021**
(21) Application number: 19839834.9
(22) Date of filing: 12.07.2019
(51) Int. Cl.: G01S 13/89, G01S 13/93, G08G 1/16

(54) **RADAR DATA PROCESSING DEVICE, OBJECT DETERMINATION DEVICE, RADAR DATA PROCESSING METHOD, AND OBJECT DETERMINATION METHOD**

(30) Priority: 27.07.2018 JP 2018140973
(71) Applicant: Panasonic Corporation, Kadoma-shi Osaka 571-8501 (JP)
(72) Inventor: LIU, Weijie, Osaka-shi, Osaka 540-6207 (JP); YASUGI, Makoto, Osaka-shi, Osaka 540-6207 (JP); NAKAGAWA, Yoichi, Osaka-shi, Osaka 540-6207 (JP)
(74) Representative: Eisenführ Speiser
(86) International application number: PCT/JP2019/027755
(87) International publication number: WO 2020/022110

(57) **Abstract**

In order to enable accurate object determination based on radar data by using a machine learning model, an object determination method involves acquiring radar data including information records of a radar reflection intensity and a velocity for each orientation and each distance; generating a radar detection image in which each pixel has a plurality of channels for containing data records of a radar reflection intensity, a velocity, and a distance, respectively, the data records corresponding to the position of the pixel; and by using a machine learning model for image recognition trained for object determination, acquiring an object determination result determined based on the radar detection image. In particular, the method includes, based on position data of an object area detected from the radar data of an entire observation area, extracting radar data of the object area from the radar data of the entire observation area; and generating the radar detection image of the object area based on the radar data of the object area.

## Description

### TECHNICAL FIELD

The present invention relates to a radar data processing device and a radar data processing method for processing radar data provided from a radar apparatus, as well as an object determination device and an object determination method for determining an object based on radar data provided from a radar apparatus.

### BACKGROUND ART

In recent years, technologies for detecting moving objects around a vehicle, such as another vehicle or a pedestrian, have been commonly used in order to improve the safety of traveling vehicles. In addition, studies have been in progress for the practical use of safe driving technologies utilizing ITS (Intelligent Transport System) in which a roadside device(s) equipped with a radar (what is called an infrastructure radar) is installed at a location where accidents are likely to occur, such as an intersection, so that the device can detect moving objects around it by using the radar and notify in-vehicle terminals and pedestrian terminals that there is a risk of collision accident.

Such radar-based object detection technologies enable detection of moving objects around a vehicle based on radar data (such as a radar reflection intensity and a Doppler velocity) provided from a radar apparatus. In addition, it is desirable to utilize technologies for object determination (object recognition) based on radar data in order to determine whether the detected moving object is a vehicle or a person.

Known such technologies related to object determination based on radar data include determining whether a vehicle or a person based on the difference in the radio wave reflectance between vehicles and persons (See Patent Document 1).

### PRIOR ART DOCUMENT (S)

### PATENT DOCUMENT(S)

Patent Document 1: JP5206579B

### SUMMARY OF THE INVENTION

### TASK TO BE ACCOMPLISHED BY THE INVENTION

However, in the above-described prior art technology, a change in the radio wave reflectance depending on various factors, such as the direction of a radio wave and the material of an object, often prevents proper distinction between vehicles and persons. In particular, there has been a problem that, when a person is located close to a vehicle, the prior art technology tends to misrecognize the person as part of the vehicle.

Meanwhile, image recognition technologies, in which an image captured by a camera is analyzed to determine an object in the image, have been widely used. In the image recognition technologies, a feature amount of an object area is extracted from a captured image, and the object is determined based on the feature amount. Moreover, for image recognition, a machine learning model, particularly a deep learning model, has been recently used on to dramatically improve the accuracy of image recognition. Therefore, it is expected that a machine learning model is used for object determination based on radar data to thereby enable highly accurate object determination.

The present invention has been made in view of the above-described situation, and a primary object of the present invention is to provide a radar data processing device and a radar data processing method for processing radar data provided from a radar apparatus, as well as an object determination device and an object determination method which use enable highly accurate object determination based on radar data by using a machine learning model.

### MEANS TO ACCOMPLISH THE TASK

An aspect of the present invention provides a radar data processing device for processing radar data provided from a radar apparatus, comprising a controller configured to create an image of the radar data, wherein the controller is configured to: acquire the radar data including information records of a radar reflection intensity and a velocity for each orientation and each distance; and generate a radar detection image in which each pixel has a plurality of channels for containing data records of a radar reflection intensity, a velocity, and a distance, respectively, the data records corresponding to the position of the pixel.

Another aspect of the present invention provides an object determination device for determining an object based on radar data provided from a radar apparatus, comprising a controller configured to determine an object based on the radar data, wherein the controller is configured to: acquire the radar data including information records of a radar reflection intensity and a velocity for each orientation and each distance; generate a radar detection image in which each pixel has a plurality of channels for containing data records of a radar reflection intensity, a velocity, and a distance, respectively, the data records corresponding to the position of the pixel; and by using a machine learning model for image recognition trained for object determination, acquire an object determination result determined based on the radar detection image.

Yet another aspect of the present invention provides a radar data processing method for processing radar data provided from a radar apparatus, the method comprising: acquiring the radar data including information records of a radar reflection intensity and a velocity for each orientation and each distance; and generating a radar detection image in which each pixel has a plurality of channels for containing data records of a radar reflection intensity, a velocity, and a distance, respectively, the data records corresponding to the position of the pixel.

Yet another aspect of the present invention provides an object determination method for determining an object based on radar data provided from a radar apparatus, the method comprising: acquiring the radar data including information records of a radar reflection intensity and a velocity for each orientation and each distance; generating a radar detection image in which each pixel has a plurality of channels for containing data records of a radar reflection intensity, a velocity, and a distance, respectively, the data records corresponding to the position of the pixel; and by using a machine learning model for image recognition trained for object determination, acquiring an object determination result determined based on the radar detection image.

### EFFECT OF THE INVENTION

The present invention allows for use of a machine learning model for image recognition in object determination to acquire a radar detection image which visualizes radar data, thereby enabling highly accurate object determination based on the radar data.

### BRIEF DESCRIPTION OF THE DRAWINGS

Figure 1 is a block diagram showing a schematic configuration of an object determination device 1 according to a first embodiment of the present invention;
Figure 2 is an explanatory diagram showing an outline of operations of object determination performed by the object determination device 1 according to the first embodiment;
Figure 3 is an explanatory diagram showing the characteristics of radar data provided from a radar apparatus 2 according to the first embodiment;
Figure 4 is an explanatory diagram showing an outline of operations of training a model performed by the object determination device 1 according to the first embodiment;
Figure 5 is a flow chart showing an operation procedure of the object determination performed by the object determination device 1 according to the first embodiment;
Figure 6 is a flow chart showing an operation procedure of a data processing operation (ST104 in Figure 5) according to the first embodiment;
Figure 7 is a flow chart showing an operation procedure of operations of generating training data and building a deep learning model performed by the object determination device 1 according to the first embodiment;
Figure 8 is a block diagram showing a schematic configuration of an object determination device 1 according to a second embodiment of the present invention;
Figure 9 is a flow chart showing an operation procedure of the object determination performed by the object determination device 1 according to the second embodiment;
Figure 10 is a flow chart showing an operation procedure of a data processing operation (ST111 in Figure 9) according to the second embodiment;
Figure 11 is a flow chart showing an operation procedure of generating training data and building a deep learning model in the object determination device 1 according to the second embodiment;
Figure 12 is a block diagram showing a schematic configuration of an object determination device 1 according to a third embodiment of the present invention;
Figure 13 is a flow chart showing an operation procedure of the object determination performed by the object determination device 1 according to the third embodiment;
Figure 14 is a block diagram showing a schematic configuration of an object determination device 1 according to a fourth embodiment of the present invention; and
Figure 15 is a flow chart showing an operation procedure of the object determination performed by the object determination device 1 according to the fourth embodiment.

### DESCRIPTION OF THE PREFERRED EMBODIMENT(S)

A first aspect of the present invention made to achieve the above-described object is a radar data processing device for processing radar data provided from a radar apparatus, comprising a controller configured to create an image of the radar data, wherein the controller is configured to: acquire the radar data including information records of a radar reflection intensity and a velocity for each orientation and each distance; and generate a radar detection image in which each pixel has a plurality of channels for containing data records of a radar reflection intensity, a velocity, and a distance, respectively, the data records corresponding to the position of the pixel.

This configuration allows for use of a machine learning model for image recognition in object determination to acquire a radar detection image which visualizes radar data, thereby enabling highly accurate object determination based on the radar data.

A second aspect of the present invention is the radar data processing device of the first aspect, wherein the controller is configured to: based on position data of one or more object areas detected from the radar data of an entire observation area, extract radar data of the one or more object areas from the radar data of the entire observation area; and generate the radar detection image of each object area based on the radar data of the one or more object areas.

In this configuration, the device is required to perform object determination with the use of a machine learning model only on the radar detection images of the one or more object areas. This can reduce the processing load for the device when performing object determination using the machine learning model.

A third aspect of the present invention is the radar data processing device of the first aspect, wherein the controller is configured to generate the radar detection image of an entire observation area based on the radar data of the entire observation area.

Since this configuration uses the machine learning model which can be used for object detection in addition to object determination, it is possible to perform object detection and object determination in a highly accurate and efficient manner.

A fourth aspect of the present invention is the radar data processing device of the second aspect, wherein the controller is configured to generate the radar detection image of each object area such that the radar detection image has a size corresponding to the distance to the object area.

Since this configuration generates radar detection images of object areas having different sizes depending on the amount of radar data in the respective object areas, it is possible to perform object determination in a highly accurate manner.

A fifth aspect of the present invention is the radar data processing device of the first aspect, wherein the controller is configured to generate the radar detection image based on a set of radar data acquired at a plurality of times.

In this configuration, each radar detection image contains a set of radar data acquired at a plurality of times. This improves the accuracy of object determination.

A sixth aspect of the present invention is the radar data processing device of the first aspect, wherein the controller is configured to generate the radar detection images of one or more object areas with each radar detection image having a margin area around a corresponding object area such that the radar detection images are uniformly sized.

Since, in this configuration, the radar detection images are uniformly sized regardless of the size of an object area in each radar detection image, it is possible to process the radar detection images by using the machine learning model in the same manner. In addition, since the original radar data is not subjected to any change such as a change by scaling an image, object determination can be performed in a highly accurate manner.

A seventh aspect of the present invention is an object determination device for determining an object based on radar data provided from a radar apparatus, comprising a controller configured to determine an object based on the radar data, wherein the controller is configured to: acquire the radar data including information records of a radar reflection intensity and a velocity for each orientation and each distance; generate a radar detection image in which each pixel has a plurality of channels for containing data records of a radar reflection intensity, a velocity, and a distance, respectively, the data records corresponding to the position of the pixel; and by using a machine learning model for image recognition trained for object determination, acquire an object determination result determined based on the radar detection image.

This configuration performs object determination based on a radar detection image which visualizes radar data by using a machine learning model for image recognition, thereby enabling highly accurate object determination based on the radar data.

An eighth aspect of the present invention is a radar data processing method for processing radar data provided from a radar apparatus, the method comprising: acquiring the radar data including information records of a radar reflection intensity and a velocity for each orientation and each distance; and generating a radar detection image in which each pixel has a plurality of channels for containing data records of a radar reflection intensity, a velocity, and a distance, respectively, the data records corresponding to the position of the pixel.

This configuration allows for use of a machine learning model for image recognition in object determination to acquire a radar detection image which visualizes radar data, thereby enabling highly accurate object determination based on the radar data in the same manner as the first aspect.

A ninth aspect of the present invention is an object determination method for determining an object based on radar data provided from a radar apparatus, the method comprising: acquiring the radar data including information records of a radar reflection intensity and a velocity for each orientation and each distance; generating a radar detection image in which each pixel has a plurality of channels for containing data records of a radar reflection intensity, a velocity, and a distance, respectively, the data records corresponding to the position of the pixel; and by using a machine learning model for image recognition trained for object determination, acquiring an object determination result determined based on the radar detection image.

This configuration performs object determination based on a radar detection image which visualizes radar data by using a machine learning model for image recognition, thereby enabling highly accurate object determination based on the radar data in the same manner as the seventh aspect.

Embodiments of the present invention will be described below with reference to the drawings.

### (First Embodiment)

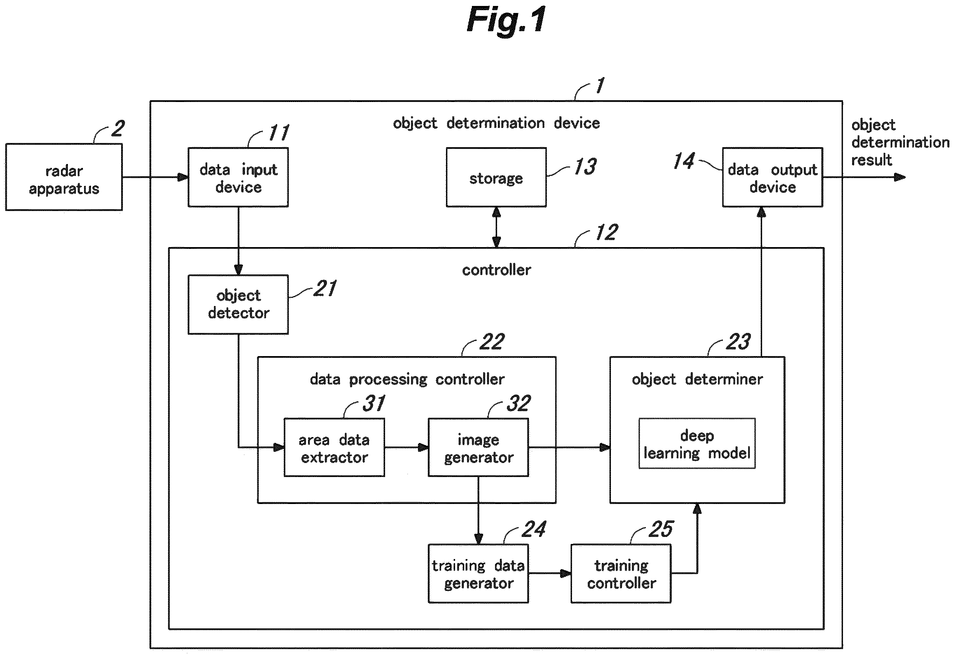

Figure 1 is a block diagram showing a schematic configuration of an object determination device 1 according to a first embodiment of the present invention.

The object determination device 1 (radar data processing device, information processing device) determines the attributes (types) of objects present in an observation area based on radar data provided from a radar apparatus 2. For example, the object determination device 1 provided in a roadside machine (infrastructure radar) uses a determination result for an objects (moving object) present in surroundings to determine if there is a risk of collision and control notification, while the object determination device 1 mounted on a vehicle uses a determination result for an object present in surroundings in the control for collision avoidance.

The object determination device 1 is configured to determine whether an object is a vehicle or a person as the object's attribute. Moreover, the object determination device 1 is configured to further determine whether the vehicle is a four-wheeled vehicle or a two-wheeled vehicle, and determine whether the four-wheeled vehicle is a large vehicle or a small vehicle.

The radar apparatus 2 emits radio waves in a millimeter waveband or in any other waveband, detects radio waves reflected by an object, and outputs radar data (measurement data). Such radar data includes a radar reflection intensity (information records about the intensity of radar reflection) and Doppler velocity (information about the velocity of an object) for each orientation and each distance (range).

The object determination device 1 includes a data input device 11, a controller 12, a storage 13, and a data output device 14.

The data input device 11 receives radar data provided from the radar apparatus 2. The data output device 14 outputs an object determination result generated by the controller 12.

The storage 13 stores radar data provided from the radar apparatus 2, programs to be executed by a processor which implements the controller 12 and other functional units.

The controller 12 includes an object detector 21, a data processing controller 22, an object determiner 23, a training data generator 24, and a training controller 25. The data processing controller 22 includes an area data extractor 31 and an image generator 32. The controller 12 is composed primarily of a processor, and each functional unit of the controller 12 is implemented by a processor executing a program stored in the storage 13.

Although, in the present embodiment, the object determination device 1 includes the object detector 21, the data processing controller 22, and the object determiner 23, each functional unit may be implemented by a separate device. Moreover, although the object determination device 1 includes the training data generator 24 and the training controller 25, each of these functional units may be implemented by a separate device from the object determination device.

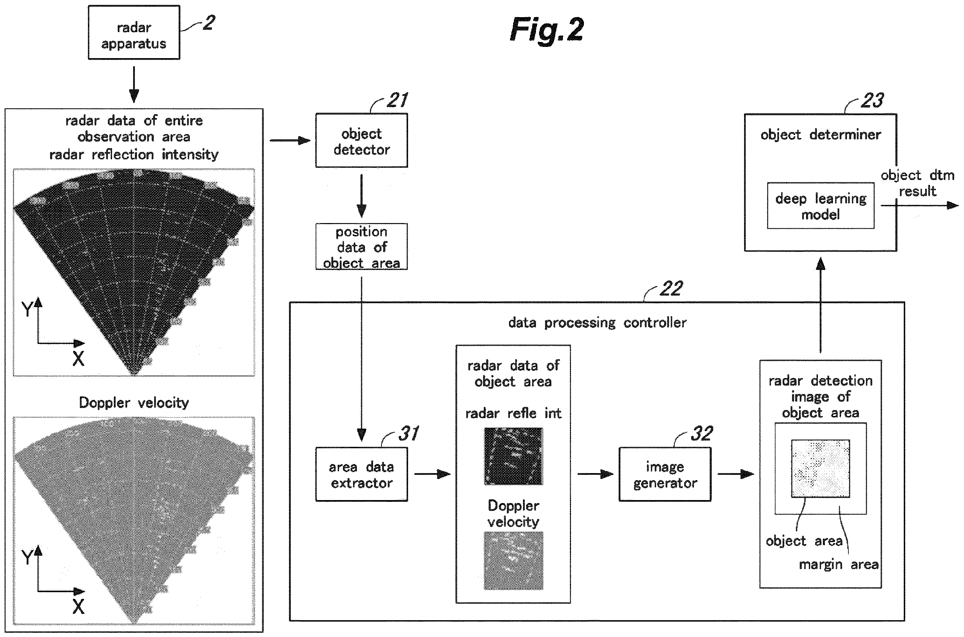

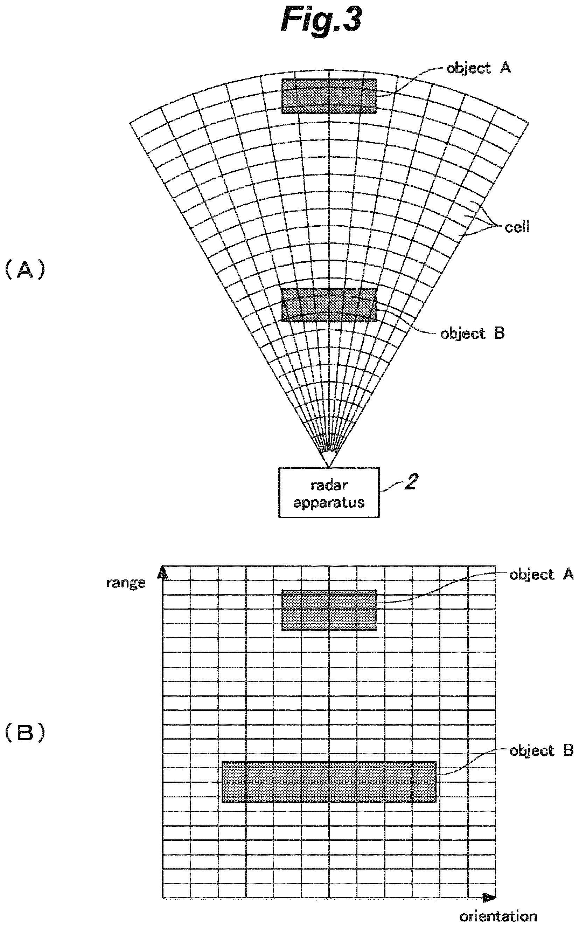

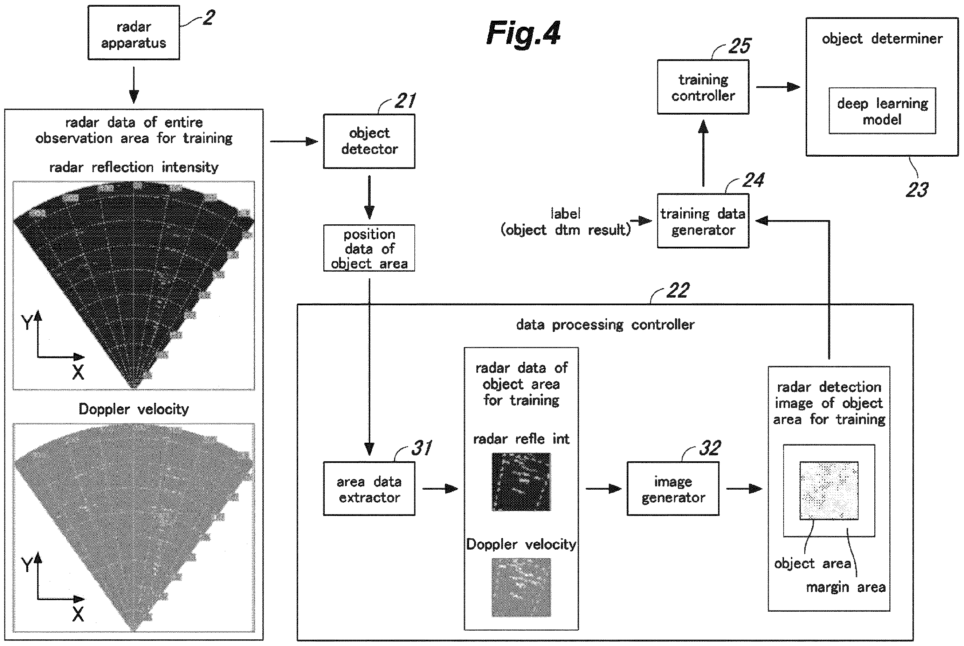

Next, operations performed by the object determination device 1 according to the first embodiment will be described. Figure 2 is an explanatory diagram showing an outline of operations of object determination performed by the object determination device 1. Figure 3 is an explanatory diagram showing the characteristics of radar data provided from a radar apparatus 2. Figure 4 is an explanatory diagram showing an outline of operations of training a model performed by the object determination device 1.

As shown in Figure 2, the radar apparatus 2 outputs a radar reflection intensity and a Doppler velocity for each orientation and each distance (range) as radar data. Figure 2 shows two heat maps: a heat map in which the radar reflection intensity is visualized and a heat map in which the Doppler velocity is visualized. The heat maps visualize radar data, indicating the orientation and the distance (range) in the XY Cartesian coordinate system, which have been converted from those originally represented using the polar coordinate system. In the heat maps, an observation area is visualized in a fan shape.

In the object determination device 1, first, the object detector 21 detects one or more object areas from the radar data of an entire observation area. Next, the area data extractor 31 in the data processing controller 22 extracts, based on position data of each object area detected by the object detector 21, radar data of the object area from the radar data of the entire observation area. Next, the image generator 32 generates a radar detection image of each object area based on the radar data of the object area. Next, the object determiner 23 determines attributes of an object in each object area based on the radar detection image of the object area.

The radar detection image of an object area generated by the image generator 32 is an image which visualizes the radar data of the object area. Specifically, respective data records of a radar reflection intensity, a Doppler velocity, and a distance (ranges) included in the radar data of an object area are stored in a plurality of channels of each pixel located at a corresponding position in the radar detection image. For example, when the image generator 32 generates a radar detection image in RGB format, data records of a Doppler velocity, a radar reflection intensity, and a distance (range) of each pixel are stored in the R channel, the G channel and the B channel, respectively.

As shown in Figure 3A, the image generator 32 generates radar data in the form of cells arranged on coordinate axes representing orientations and distances (ranges). In radar data, although the resolution of the distances is constant, the resolutions of the orientation differ depending on the distance; that is, the resolutions of the orientations are high at a relatively short distance (for example, 3 m) and low at a relatively long distance (for example, 80 m). As a result, as shown in Figure 3B, for the objects A and B having the same size, the numbers of cells included in the respective object areas are the same in the direction of the distance (range) axis, and differ along the direction of the orientation axis depending on the distance. In other words, for an object, the number of cells in the direction of the orientation axis decreases at a long distance, and increases at a short distance.

Meanwhile, as shown in Figure 2, when radar data of an object area is extracted from the radar data of an entire observation area, the distance (range) information records disappear from the radar data, and thus it become unable to determine the size of the object. Thus, in the present embodiment, distance (range) information records are contained in a radar detection image, in addition to information records of radar reflection intensities and Doppler velocities.

Furthermore, the data processing controller 22 may generate radar detection images in the XY Cartesian coordinate system, similar to the heat maps representing radar reflection intensities and Doppler velocities. In this case, the area data extractor 31 performs a coordinate conversion to convert the polar coordinate system of radar data to its corresponding XY Cartesian coordinate system. The coordinate system of radar detection images is not limited to the XY Cartesian coordinate system, and may be a polar coordinate system defined by orientation and distance (range) axes like radar data.

The object determiner 23 uses a machine learning model, in particularly a deep learning model, to determine attributes of an object in an object area from a corresponding area in a radar detection image. Specifically, the object determiner 23 applies a radar detection image of the object area received as input data to a deep learning model, performs object determination using the deep learning model, and acquires an object determination result provided from the deep learning model. The deep learning model for the present embodiment is a deep learning model for image recognition. A CNN (convolutional neural network) is preferably used as the deep learning model for image recognition.

The image generator 32 makes radar detection images uniformly sized so that all the images can be processed in the same manner by using the deep learning model in the object determiner 23, regardless of the size of each object area detected by the object detector 21. In this case, when an image is changed by scaling, the original radar data is subjected to a change. Thus, the image generator 32 determines the size of radar detection images based on the possible maximum size of the object areas, and generates radar detection images with each radar detection image having a margin area around a corresponding object area (an area for which radar data is stored) such that the radar detection images have the determined size.

Furthermore, as shown in Figure 4, when a machine learning model is trained, the object detector 21 detects an object area in the radar data of an entire observation area for training, where the radar data was provided from the radar apparatus 2 in the past. Next, the area data extractor 31 extracts the radar data of one or more object areas detected by the object detector from the radar data of the entire observation area for training based on the position data of each object area. Then, the image generator 32 generates a radar detection image of each object area for training based on the radar data of the object area for training.

The training data generator 24 generates training data including a radar detection image of each object area for training generated by the image generator 32, in association with a corresponding object determination result (label) relating to the attribute(s) of the object included in the radar detection image. Each object determination result is entered by an operator who has visually checked a corresponding object. For example, an operator may visually check an image captured by a camera which corresponds to radar data for training to thereby recognize the attribute of the object in each radar detection image for training.

The training controller 25 is configured to train a deep learning model with training data generated by the training data generator 24; acquire, as a training result, model parameters (settings information) of the deep learning model; and apply the acquired model parameters to the deep learning model used by the object determiner 23 to thereby build a trained deep learning model.

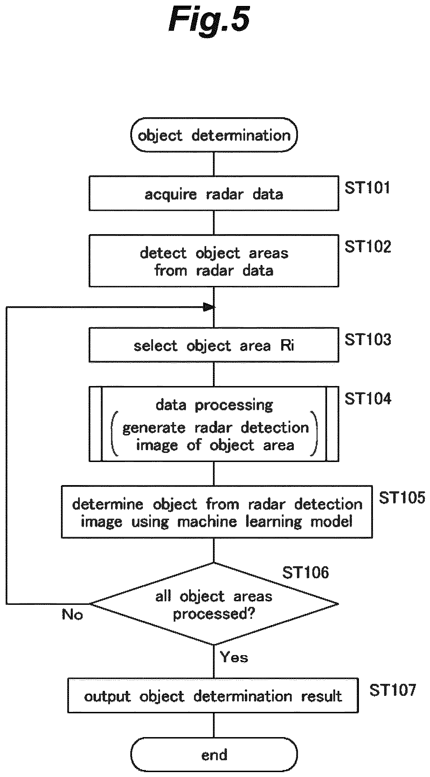

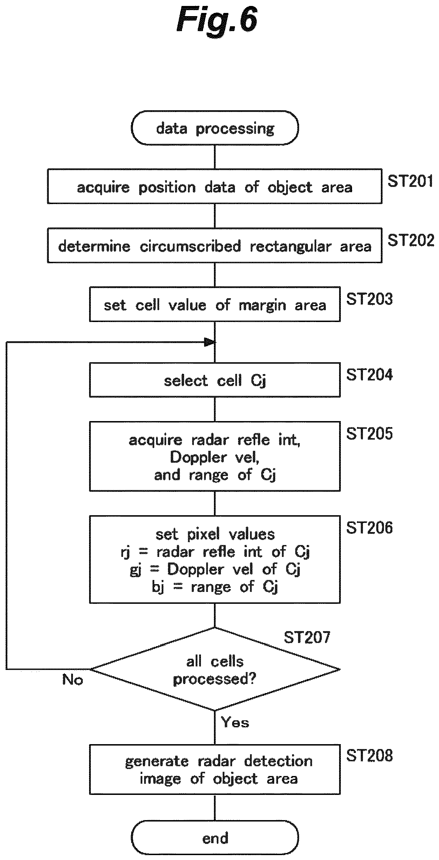

Next, an operation procedure of object determination performed by the object determination device 1 according to the first embodiment will be described. Figure 5 is a flow chart showing an operation procedure of the object determination performed by the object determination device 1. Figure 6 is a flow chart showing an operation procedure of a data processing operation (ST104 in Figure 5).

In the object determination device 1, as shown in Figure 5, the controller 12 first acquires radar data (a radar reflection intensity and a Doppler velocity for each orientation and each distance) of an entire observation area, where the radar data was provided from the radar apparatus 2 (ST101). Next, the object detector 21 detects object areas from the radar data of the entire observation area (ST102).

Next, the controller 12 selects one object area Ri (i = 1 to N) (ST103).

Next, the data processing controller 22 performs the data processing operation (ST104). Specifically, the area data extractor 31 extracts the radar data of the selected object area from the radar data of the entire observation area, and then the image generator 32 generates a radar detection image of the object area based on the radar data of the object area.

Next, the object determiner 23 applies the radar detection image of the object area generated by the image generator 32 to the trained deep learning model, thereby performing object determination using the deep learning model to acquire an object determination result determined by using the deep learning model (ST105).

Next, the controller 12 determines whether or not the processing operations on all the object areas have been completed (ST106). If the processing operations on all the object areas have not been completed (No in ST106), the process returns to ST103, and the controller 12 selects the next object area to perform the processing operation on that object area.

If the processing operations on all the object areas have been completed (Yes in ST106), the controller 12 outputs an object determination result and position data for each object area acquired by the object determiner 23 (ST107).

In the data processing operation (ST104), as shown in Figure 6, the data processing controller 22 first acquires the position data of an object area detected by the object detector 21 (ST201). Next, the data processing controller 22 determines the circumscribed rectangular area surrounding the object area based on the position data of the object area (ST202). Next, the data processing controller 22 sets a cell value of the margin area (the area other than the object area) in the radar detection image (ST203).

Next, the area data extractor 31 selects one cell Cj (j = 1 to M) in the object area (the circumscribed rectangle) (ST204). Then, the area data extractor 31 acquires a radar reflection intensity, a Doppler velocity, and a range for the selected cell Cj from the radar data of the entire observation area (ST205).

Next, the image generator 32 sets pixel values (respective values of the channels of RGB) of each pixel at the position corresponding to the cell Cj based on the radar reflection intensity, the Doppler velocity, and the range of the cell Cj (ST206). Specifically, the image generator 32 sets a radar reflection intensity, a Doppler velocity, and a range for the cell Cj as a R value rj, a G value gj, a B value bj, respectively.

Next, the controller 12 determines whether or not the processing operations on all the cells have been completed (ST207). If the processing operations on all the cells have not been completed (No in ST207), the process returns to ST204, and the controller 12 selects the next cell to perform the processing operation on that cell.

If the processing operations on all the cells have been completed (Yes in ST207), the image generator 32 generates a radar detection image of the object area based on pixel values of RGB of each pixel (ST208).

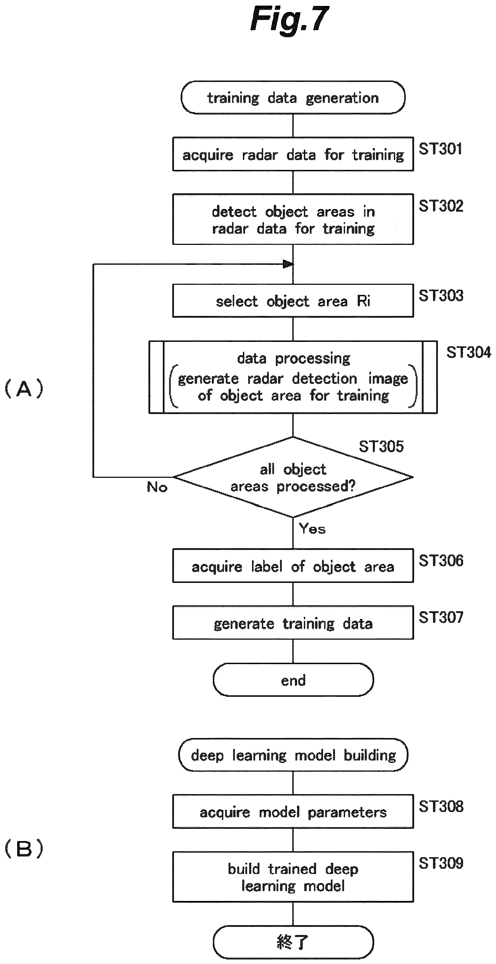

Next, an operation procedure of operations of training a machine learning model performed by the object determination device 1 according to the first embodiment will be described. Figure 7 is a flow chart showing an operation procedure of operations of generating training data and building a deep learning model performed by the object determination device 1.

In the object determination device 1, as shown in Figure 7A, when training data is generated, the controller 12 first acquires radar data (a radar reflection intensity and a Doppler velocity for each orientation and each distance) of an entire observation area for training, where the radar data was provided from the radar apparatus 2 in the past (ST301). Next, the object detector 21 detects object areas from the radar data of the entire observation area for training (ST302).

Next, the controller 12 selects one object area Ri (i = 1 to N) (ST303).

Next, the data processing controller 22 performs a data processing operation (ST304). Specifically, the area data extractor 31 extracts the radar data of the selected object area for training from the radar data of the entire observation area, and then the image generator 32 generates a radar detection image of the object area for training based on the radar data of the object area for training. The data processing operation is performed in a similar manner to that for object determination (See Figure 6).

Next, the controller 12 determines whether or not the processing operations on all the object areas have been completed (ST305). If the processing operations on all the object areas have not been completed (No in ST305), the process returns to ST303, and the controller 12 selects the next object area to perform the processing operation on that object area.

If the processing operations on all the object areas have been completed (Yes in ST305), the training data generator 24 acquires an object determination result (label) of each object area (ST306). Each object determination result is entered by an operator who has visually checked a corresponding object.

Next, the training data generator 24 generates training data including a radar detection image of each object area generated by the image generator 32 in association with a corresponding object determination result (label) (ST307).

Training data is generated as described above. Such training data is preferably generated as much as possible. Therefore, the object determination device 1 is preferably configured to collect a large amount of radar data (heat maps) of different locations and times, thereby generating a large amount of radar detection images for training.

In the embodiment shown in Figure 7, the object determination device 1 generates training data from all the object areas included in the radar data (heat maps) of the entire observation area. However, in other embodiment, the object determination device 1 may generate training data from only some of the object areas.

In the object determination device 1, as shown in Figure 7B, when a deep learning model is built, the training controller 25 trains a deep learning model with training data generated by the training data generator 24 and acquire, as a training result, model parameters (settings information) of the deep learning model (ST308).

Then, the training controller 25 applies the acquired model parameters to a deep learning model used by the object determiner 23 to thereby build a trained deep learning model.

### (Second Embodiment)

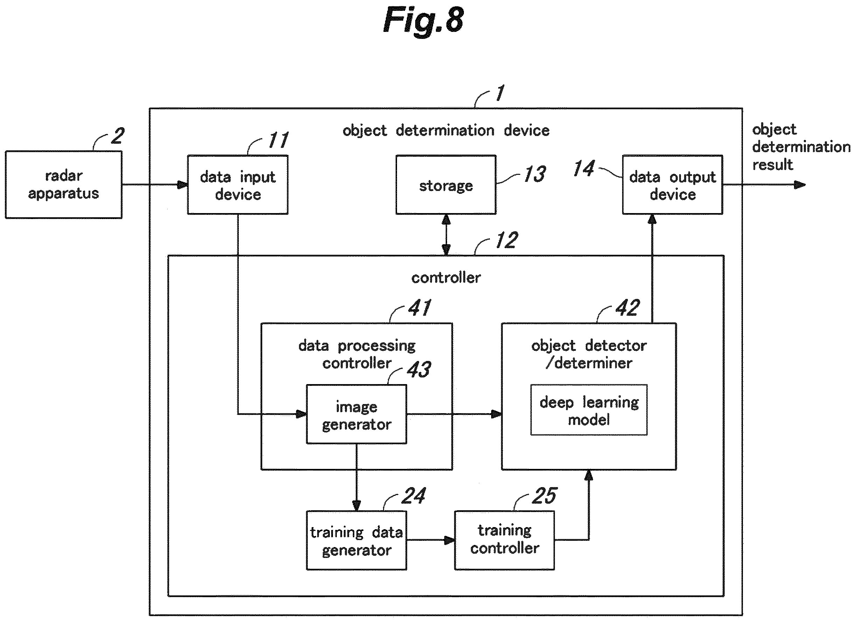

Next, a second embodiment of the present invention will be described. Except for what will be discussed here, this embodiment is the same as the above-described embodiment. Figure 8 is a block diagram showing a schematic configuration of an object determination device 1 according to the second embodiment.

In the first embodiment, the object determination device 1 performs object determination to determine an object in each detected object area by using a deep learning model, while in the present embodiment, an object determination device 1 is configured to perform, in addition to object determination, object detection to detect one or more object areas using a deep learning model.

A controller 12 of the object determination device 1 of the second embodiment includes a data processing controller 41, an object detector/determiner 42, a training data generator 24, and a training controller 25.

The data processing controller 41 includes an image generator 43. The image generator 43 generates a radar detection image of an entire observation area based on the radar data of the entire observation area.

The object detector/determiner 42 applies a radar detection image of the entire observation area generated by the image generator 43 as input data to a trained deep learning model, performs object detection and object determination using the deep learning model, and acquires an object determination result for each object area provided from the deep learning model. The deep learning model for the present embodiment is a deep learning model for image recognition and search. A faster R-CNN (regions with convolutional neural network) is preferably used as the deep learning model for image recognition and search.

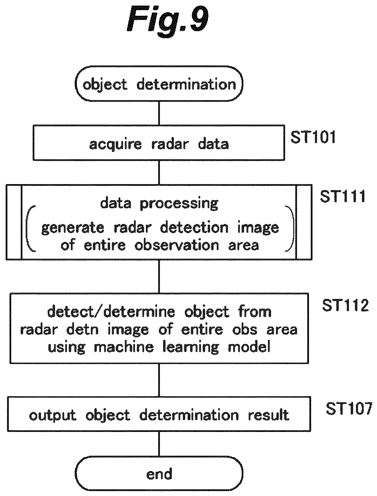

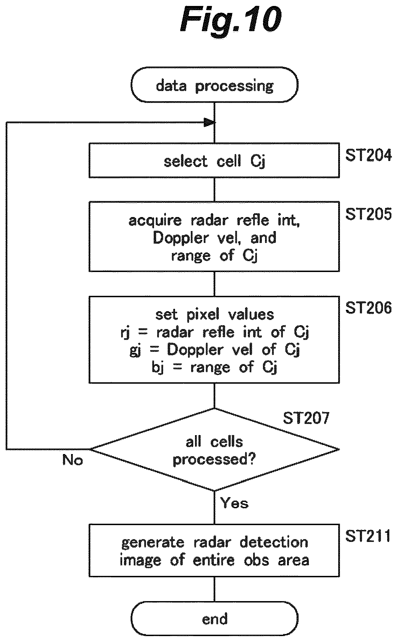

Next, an operation procedure of object determination performed by the object determination device 1 according to the second embodiment will be described. Figure 9 is a flow chart showing an operation procedure of the object determination performed by the object determination device 1. Figure 10 is a flow chart showing an operation procedure of a data processing operation (ST111 in Figure 9).

In the object determination device 1, as shown in Figure 9, the controller 12 first acquires radar data (a radar reflection intensity and a Doppler velocity for each orientation and each distance) of an entire observation area, where the radar data was provided from the radar apparatus 2 (ST101).

Next, the data processing controller 22 performs the data processing operation (ST111). Specifically, the image generator 43 generates a radar detection image of the entire observation area based on the radar data of the entire observation area.

Next, the object detector/determiner 42 applies the radar detection image of the entire observation area generated by the image generator 43 as input data to the trained deep learning model, performs object detection and object determination using the deep learning model, and acquires an object determination result for each object determined by using the deep learning model (ST112).

Next, the controller 12 outputs an object determination result and position data for each of the detected objects.

In the data processing operation (ST111), as shown in Figure 10, the data processing controller 22 selects one cell Cj (j = 1 to M) (ST204). Then, the data processing controller 22 acquires a radar reflection intensity, a Doppler velocity, and a range for the selected cell Cj from the radar data of the entire observation area (ST205).

Next, the image generator 32 sets pixel values (respective values of the channels of RGB) of each pixel at the position corresponding to the cell Cj based on the radar reflection intensity, the Doppler velocity, and the range of the cell Cj (ST206). Specifically, the image generator 32 sets a radar reflection intensity, a Doppler velocity, and a range for the cell Cj as a R value rj, a G value gj, a B value bj, respectively.

Next, the controller 12 determines whether or not the processing operations on all the cells have been completed (ST207). If the processing operations on all the cells have not been completed (No in ST207), the process returns to ST204, and the controller 12 selects the next cell to perform the processing operations on that cell.

If the processing operations on all the cells have been completed (Yes in ST207), the image generator 32 generates a radar detection image of the object area based on pixel values of RGB of each pixel (ST208).

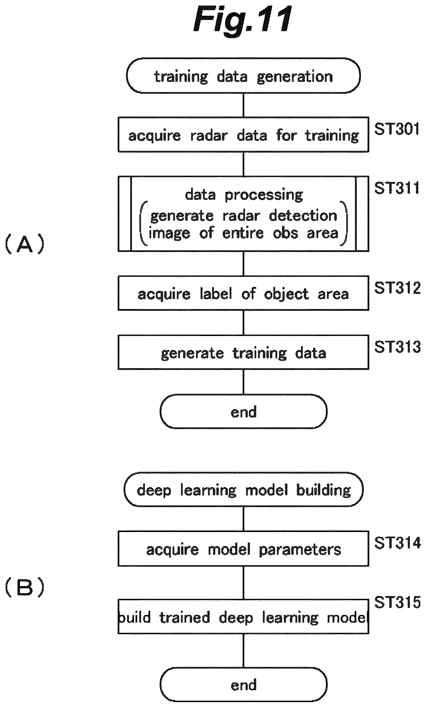

Next, an operation procedure of operations of training a machine learning model performed by the object determination device 1 according to the second embodiment will be described. Figure 11 is a flow chart showing an operation procedure of operations of generating training data and building a deep learning model performed by the object determination device 1.

In the object determination device 1, as shown in Figure 7A, when training data is generated, the controller 12 first acquires radar data (a radar reflection intensity and a Doppler velocity for each orientation and each distance) of an entire observation area for training, where the radar data was provided from the radar apparatus 2 in the past (ST301).

Next, the data processing controller 41 performs the data processing operation (ST311). Specifically, the image generator 43 generates a radar detection image of the entire observation area for training based on the radar data of the entire observation area for training. The data processing operation is performed in a similar manner to that for object determination (See Figure 10).

Next, the training data generator 24 acquires an object determination result (label) of each object area (ST306). Each object determination result is entered by an operator who has visually checked a corresponding object. When the radar data of the entire observation area for training includes a plurality of object areas, the training data generator 24 acquires an object determination result (label) of each of the object areas.

Next, the training data generator 24 generates training data including the radar detection image of the entire observation area for training generated by the image generator 32, in association with one or more object determination results (labels) (ST313).

In the object determination device 1, as shown in Figure 11B, when a trained deep learning model is built, the training controller 25 trains a deep learning model with training data generated by the training data generator 24 and acquire, as a training result, the model parameters (settings information) of the deep learning model (ST314).

Then, the training controller 25 applies the acquired model parameters to a deep learning model used by the object detector/determiner 42 to thereby build a trained deep learning model.

### (Third Embodiment)

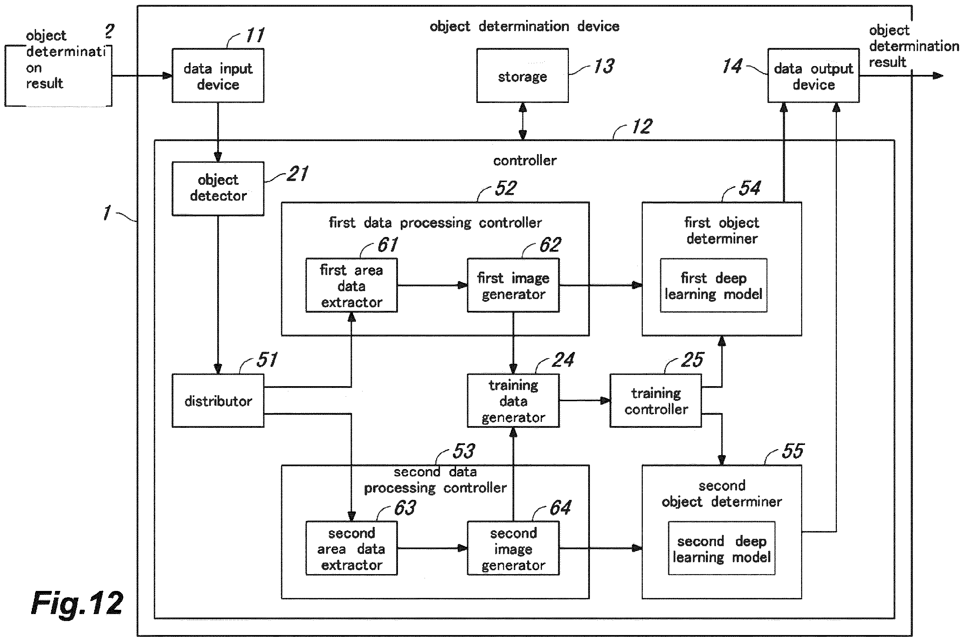

Next, a third embodiment of the present invention will be described. Except for what will be discussed here, this embodiment is the same as the above-described embodiments. Figure 12 is a block diagram showing a schematic configuration of an object determination device 1 according to the third embodiment.

In the first embodiment, radar detection images of object areas are generated so that the images have the same size, regardless of the range (distance) of each object area. However, the amount of radar data information (the number of cells) for an object area varies greatly depending on the distance (range) of the object area (see Figure 3).

Thus, in the present invention, in visualizing radar data of object areas, each image of an object area is created such that the size of the created image varies depending on the distance (ranges) of the object area. In particular, in the present embodiment, radar data is visualized using a division into two cases; that is, in the cases of a long distance and a short distance.

A controller 12 of the object determination device 1 includes an object detector 21, a distributor 51, a first data processing controller 52, a second data processing controller 53, a first object determiner 54, a second object determiner 55, a training data generator 24, and a training controller 25.

The distributor 51 distributes radar data processing operations to the first data processing controller 52 and the second data processing controller 53 based on the distance (range) of an object area detected by the object detector 21. Specifically, when the distance of an object area is a long distance; that is, a distance equal to or greater than a predetermined value, the distributor 51 causes the first data processing controller 52 to perform processing operations on radar data, while, when the distance of an object area is a short distance which is less than the predetermined value, causing the second data processing controller 53 to perform processing operations on radar data.

The first data processing controller 52 is configured to process radar data when the distance of an object area is a long distance, and includes a first area data extractor 61 and a first image generator 62. The first data processing controller 52 extracts radar data of an object area and generates a radar detection image having a small size.

The second data processing controller 53 is configured to process radar data when the distance of an object area is a short distance, and includes a second area data extractor 63 and a second image generator 64. The second data processing controller 53 extracts radar data of an object area and generates a radar detection image having a large size.

The first area data extractor 61 and the second area data extractor 63 operate in the same manner as the area data extractor 31 of the first embodiment. The first image generator 62 and the second image generator 64 operate in the same manner as the image generator 32 of the first embodiment.

The first object determiner 54 performs object determination on small radar detection images generated by the first data processing controller 52 using a first deep learning model.

The second object determiner 55 performs object determination on large radar detection images generated by the second data processing controller 53 using a second deep learning model.

In the present embodiment, radar data is visualized as images using a division into two cases based on the distance (range) of an object area. However, radar data may be visualized as images using a division into three or more cases.

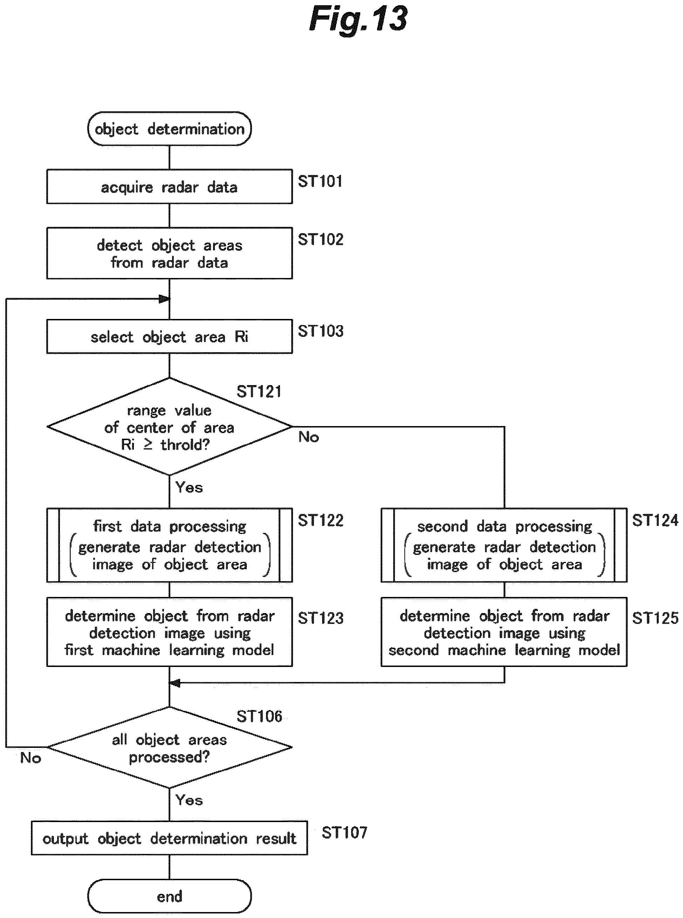

Next, an operation procedure of object determination performed by the object determination device 1 according to the third embodiment will be described. Figure 13 is a flow chart showing an operation procedure of the object determination performed by the object determination device 1.

In the object determination device 1, the controller 12 first acquires radar data (a radar reflection intensity and a Doppler velocity for each orientation and each distance) of an entire observation area, where the radar data was provided from the radar apparatus 2 (ST101). Next, the object detector 21 detects object areas from the radar data of the entire observation area (ST102).

Next, the controller 12 selects one object area Ri (i = 1 to N) (ST103).

Next, the distributor 51 determines whether the range value of the center point of the object area Ri is equal to or greater than a threshold value.

When the range value of the center point of the object area Ri is equal to or greater than the threshold value, that is, when the distance of the object area Ri is classified as a long distance (Yes in ST121), the first data processing controller 52 performs a data processing operation (ST122). Specifically, the first area data extractor 61 extracts the radar data of the object area from the radar data of the entire observation area, and the first image generator 62 generates a radar detection image of the object area based on the radar data of the object area. The data processing operation is the same as that of the first embodiment (see Figure 6).

Next, the first object determiner 54 applies the radar detection image of the object area generated by the first image generator 62 to a trained deep learning model, thereby performing object determination using the deep learning model to acquire an object determination result determined by using the deep learning model (ST123).

When the range value of the center point of the object area Ri is less than the threshold value, that is, when the distance of the object area Ri is classified as a short distance (No in ST121), the second data processing controller 53 performs a data processing operation (ST124). Specifically, the second area data extractor 63 extracts the radar data of the object area from the radar data of the entire observation area, and the second image generator 64 generates a radar detection image of the object area based on the radar data of the object area. The data processing operation is the same as that of the first embodiment (see Figure 6).

Next, the second object determiner 55 applies the radar detection image of the object area generated by the second image generator 64 to a trained deep learning model, thereby performing object determination using the deep learning model to acquire an object determination result determined by using the deep learning model (ST125).

Next, the controller 12 determines whether or not the processing operations on all the object areas have been completed (ST106). If the processing operations on all the object areas have not been completed (No in ST106), the process returns to ST103, and the controller 12 selects the next object area to perform the processing operations on that object area.

If the processing operations on all the object areas have been completed (Yes in ST106), the controller 12 outputs an object determination result and position data for each object area acquired by the object determiner 23 (ST107).

The operation procedure of operations of training a machine learning model performed by the object determination device 1 is substantially the same as that of the first embodiment (See Figure 7). However, since, in the present embodiment, the first object determiner 54 and the second object determiner 55 are used to process radar detection images of different sizes, the training data generator 24 generates respective radar detection images for training with different sizes.

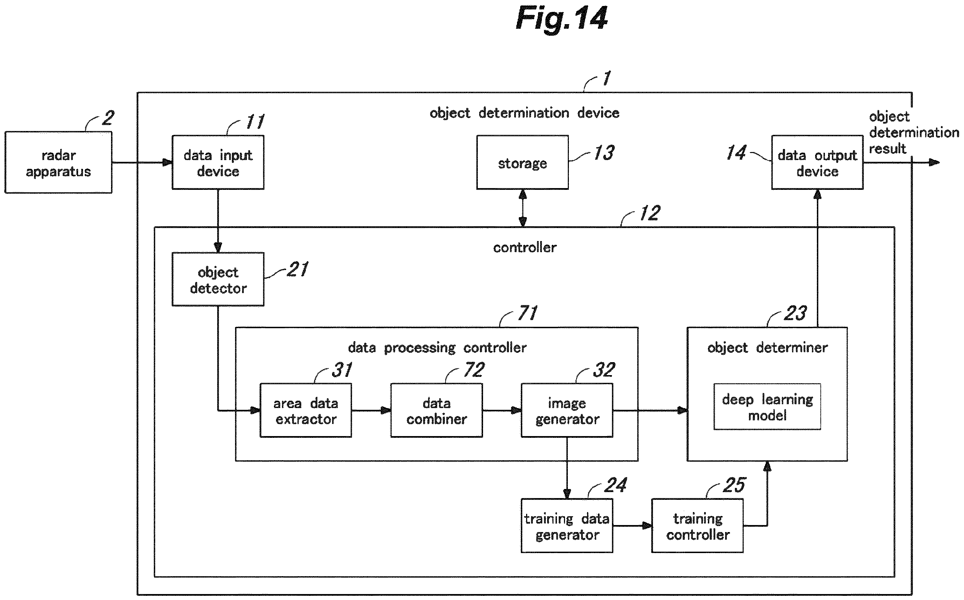

Next, a fourth embodiment of the present invention will be described. Except for what will be discussed here, this embodiment is the same as the above-described embodiments. Figure 14 is a block diagram showing a schematic configuration of an object determination device 1 according to the fourth embodiment.

The radar apparatus 2 outputs radar data of an entire observation area at intervals corresponding to a beam scanning cycle (e.g., 50 ms). Visualizing radar data of an object area extracted from the radar data of the entire observation area each time would result in generation of radar detection images at a high frame rate (for example, 20 fps). However, generation of radar detection images with such a high frame rate is not always necessary for object determination.

Thus, in the present embodiment, the object determination device 1 is configured to combine (integrate) sets of radar data of an object area extracted from the radar data of an entire observation area acquired at different times into combined radar data, and visualize the combined radar data, generating a radar detection image of the object area. This improves the accuracy of object determination.

A controller 12 of the object determination device 1 of the fourth embodiment includes an object detector 21, a data processing controller 71, an object determiner 23, a training data generator 24, and a training controller 25. The data processing controller 71 includes an area data extractor 31, a data combiner 72, and an image generator 32.

The data combiner 72 combines (integrates) sets of radar data of an object area extracted by the area data extractor 31 acquired at different times to thereby generate combined radar data of the object area.

When generating the combined radar data, for each cell of radar data, the data combiner 72 sets values for radar data acquired at different times as pixel values of different pixels in a corresponding cell in a radar detection image. As a result, it becomes possible to store a set of original radar data in a radar detection image without any change. In this case, the number of pixels of a radar detection image is increased. For example, when a set of radar data acquired at four different times are combined, the object determination device 1 can generate a radar detection image with four times the number of pixels.

In other embodiments, the data combiner 72 may acquires, for each cell of radar data, statistical representative values (such as maximal value or average value) generated from values for radar data acquired at different times through statistical processing, and set the representative values pixel values of different pixels in a corresponding cell region in a radar detection image.

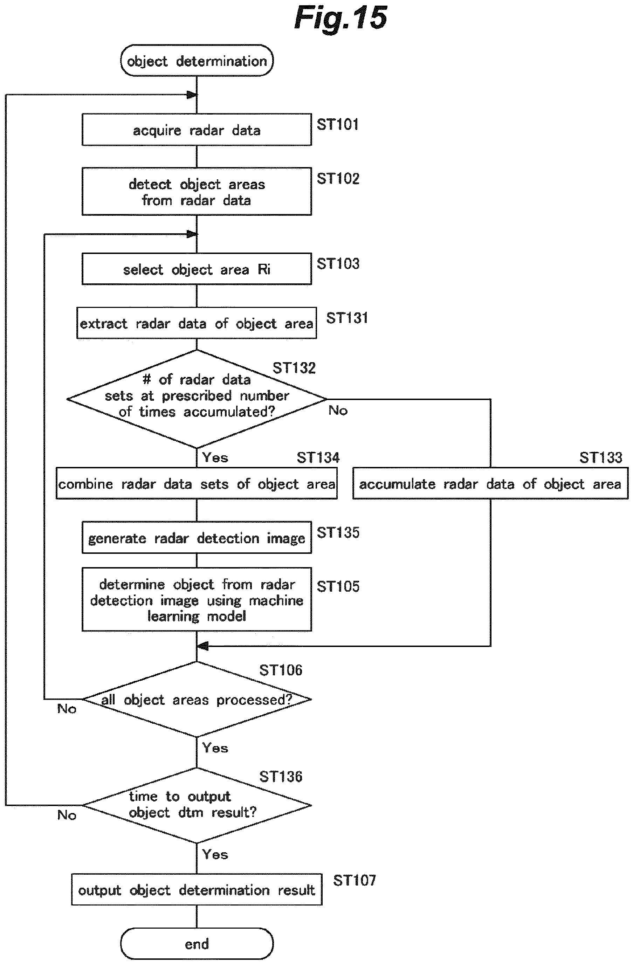

Next, an operation procedure of object determination performed by the object determination device 1 according to the fourth embodiment will be described. Figure 15 is a flow chart showing an operation procedure of the object determination performed by the object determination device 1.

In the object determination device 1, the controller 12 first acquires radar data (a radar reflection intensity and a Doppler velocity for each orientation and each distance) of an entire observation area, where the radar data was provided from the radar apparatus 2 (ST101). Next, the object detector 21 detects object areas from the radar data of the entire observation area (ST102).

Next, the controller 12 selects one object area Ri (i = 1 to N) (ST103).

Next, the area data extractor 31 of the data processing controller 22 extracts the radar data of the object area from the radar data of the entire observation area (ST131).

Next, the data combiner 72 determines whether or not sets of radar data acquired at a prescribed number of times have been accumulated (ST132).

If the radar data sets acquired at the prescribed number of times have not been accumulated (No in ST 132), radar data of the object area acquired at present is temporarily stored in the storage 13 (ST133). Then, the process proceeds to ST106.

If the radar data sets acquired at the prescribed number of times have been accumulated (Yes in ST132), the data combiner 72 acquires sets of radar data of the object area which were acquired in the past and accumulated in the storage 13, and combines the sets of radar data of the object area which were acquired in the past time, with the radar data of the object area acquired at present by the area data extractor 31 (ST134).

Next, the image generator 32 generates a radar detection image of the object area based on the combined radar data set of the object area acquired by the data combiner 72 (ST135).

Next, the object determiner 23 applies the radar detection image of the object area generated by the image generator 32 to the trained deep learning model, thereby performing object determination using the deep learning model to acquire an object determination result determined by using the deep learning model (ST105).

Next, the controller 12 determines whether or not the processing operations on all the object areas have been completed (ST106). If the processing operations on all the object areas have not been completed (No in ST106), the process returns to ST103, and the controller 12 selects the next object area to perform the processing operations on that object area.

If the processing operations on all the object areas have been completed (Yes in ST106), the controller 12 determines whether or not it is a time to output an object determination result (ST136). For example, in cases where four sets of radar data acquired at four different times are combined, the controller determines that it is a time to output an object determination result when the sequence number of a frame is a multiple of four.

If it is not a time to output an object determination result (No in ST 136), the process returns to ST101, and the controller 12 processes the radar data of the next time.

If it is a time to output an object determination result (Yes in ST136), the controller 12 outputs an object determination result and position data for each object area acquired by the object determiner 23 (ST107).

The operation procedure of operations of training a machine learning model performed by the object determination device 1 is substantially the same as that of the first embodiment (See Figure 7). However, in the present embodiment, sets of radar data acquired at different times are combined before generation of a radar detection image. Thus, in some cases, a radar detection image for training may be formed by combining sets of radar data for training acquired at different times. However, in other embodiments, a radar detection image for training may be formed simply by creating an image of a set of radar data for training acquired at one time, not by combining sets of radar data of different times.

Specific embodiments of the present invention are described herein for illustrative purposes. However, the present invention is not limited to those specific embodiments, and various changes, substitutions, additions, and omissions may be made to elements of the embodiments without departing from the scope of the invention. In addition, elements and features of the different embodiments may be combined with each other to yield an embodiment which is within the scope of the present invention.

### INDUSTRIAL APPLICABILITY

A radar data processing device, an object determination device, a radar data processing method, and an object determination method according to the present invention achieve an effect of enabling accurate object determination based on radar data by using a machine learning model, and are useful as a radar data processing device and a radar data processing method for processing radar data provided from a radar apparatus, as well as an object determination device and an object determination method for determining an object based on radar data provided from a radar apparatus.

### GLOSSARY

1 object determination device (radar data processing device, information processing device)
2 radar apparatus
11 data input device
12 controller
13 storage
14 data output device

## Claims

1. A radar data processing device for processing radar data provided from a radar apparatus, comprising a controller configured to create an image of the radar data,
wherein the controller is configured to:
acquire the radar data including information records of a radar reflection intensity and a velocity for each orientation and each distance; and
generate a radar detection image in which each pixel has a plurality of channels for containing data records of a radar reflection intensity, a velocity, and a distance, respectively, the data records corresponding to the position of the pixel.

2. The radar data processing device according to claim 1, wherein the controller is configured to:
based on position data of one or more object areas detected from the radar data of an entire observation area, extract radar data of the one or more object areas from the radar data of the entire observation area; and
generate the radar detection image of each object area based on the radar data of the one or more object areas.

3. The radar data processing device according to claim 1, wherein the controller is configured to generate the radar detection image of an entire observation area based on the radar data of the entire observation area.

4. The radar data processing device according to claim 2, wherein the controller is configured to generate the radar detection image of each object area such that the radar detection image has a size corresponding to the distance to the object area.

5. The radar data processing device according to claim 1, wherein the controller is configured to generate the radar detection image based on a set of radar data acquired at a plurality of times.

6. The radar data processing device according to claim 1, wherein the controller is configured to generate the radar detection images of one or more object areas with each radar detection image having a margin area around a corresponding object area such that the radar detection images are uniformly sized.

7. An object determination device for determining an object based on radar data provided from a radar apparatus, comprising a controller configured to determine an object based on the radar data,
wherein the controller is configured to:
acquire the radar data including information records of a radar reflection intensity and a velocity for each orientation and each distance;
generate a radar detection image in which each pixel has a plurality of channels for containing data records of a radar reflection intensity, a velocity, and a distance, respectively, the data records corresponding to the position of the pixel; and
by using a machine learning model for image recognition trained for object determination, acquire an object determination result determined based on the radar detection image.

8. A radar data processing method for processing radar data provided from a radar apparatus, the method comprising:
acquiring the radar data including information records of a radar reflection intensity and a velocity for each orientation and each distance; and
generating a radar detection image in which each pixel has a plurality of channels for containing data records of a radar reflection intensity, a velocity, and a distance, respectively, the data records corresponding to the position of the pixel.

9. An object determination method for determining an object based on radar data provided from a radar apparatus, the method comprising:
acquiring the radar data including information records of a radar reflection intensity and a velocity for each orientation and each distance;
generating a radar detection image in which each pixel has a plurality of channels for containing data records of a radar reflection intensity, a velocity, and a distance, respectively, the data records corresponding to the position of the pixel; and
by using a machine learning model for image recognition trained for object determination, acquiring an object determination result determined based on the radar detection image.
